# EUROPEAN PATENT SPECIFICATION

(11) **EP 3 379 776 B1**
(45) Date of publication and mention of the grant of the patent: **10.04.2019**
(21) Application number: 18163021.1
(22) Date of filing: 21.03.2018
(51) Int. Cl.: H04L 12/40

(54) **BUS ACTUATOR WITH MULTI VALVE COTROL FUNCTION**
BUSAKTUATOR MIT MEHRVENTILSTEUERFUNKTION
ACTIONNEUR DE BUS AVEC FONCTION DE COMMANDE DE SOUPAPES MULTIPLES

(30) Priority: 24.03.2017 DK PA201700206
(43) Date of publication of application: 26.09.2018
(73) Proprietor: Danfoss A/S, 6430 Nordborg (DK)
(72) Inventor: GORJUP, Primoz, 6430 Nordborg (DK); AZINOVIC, Igor, 6430 Nordborg (DK); NIELSEN, Claus K., 6430 Nordborg (DK); BENEDIK, Gasper, 6430 Nordborg (DK)
(74) Representative: Stevens, Brian

(56) References cited:
- EP-A1- 2 241 765
- EP-A1- 2 902 681
- DE-U1-202013 011 331
- US-A1- 2015 378 370

## Description

### FIELD OF THE INVENTION

The present invention relates to an actuator, that may be used for operating at least two valves, where one valve is flow rate control valve and a second valve a multi-way valve.

### BACKGROUND OF THE INVENTION

An actuator is normally used for controlling a component, such as a valve. Sometimes further components, such as one or more further valves, air supplies, etc., must be controlled in a manner which is coordinated with the control of the component, which the actuator controls. To this end it is necessary to connect each of the components to a central controller, and the central controller must then control each of the components. This requires a significant amount of communication between the central controller and the components, and the processing load on the central controller is significant.

In an alternative solution, an actuator has been arranged to mechanically control several components, such as several valves. However, in this case the further components must be arranged close to the actuator, and thereby close to the component, which the actuator controls. This is not always appropriate or desirable.

One prior publication. EP2902681, disclose an actuator comprising: a basis module comprising a motor arranged to drive an actuating part of the actuator, and an interface, formed on the basis module, said interface being arranged to receive at least one additional module, selected among one or more kinds of additional modules, where each additional module is arranged to cooperate with the basis module to provide additional functionality to the actuator, where different kinds of additional modules provide different functionality, wherein an actuator having an additional module of a given kind mounted at the interface is capable of performing the functionality provided by additional modules of this kind.

### DESCRIPTION OF THE INVENTION

The present invention introduces bus actuator comprising:
actuating means adapted to drive a first component, and
   - a bus connection allowing the bus actuator in addition to be in data exchange connection to at least one additional component.
wherein the actuator further comprises or is in connection to data processing means adapted to generate an actuation signal to respectively drive said first component, and to the at least one additional component through the bus connection. In this manner it is achieved that additional devices can be added in a data exchange manner (e.g. control and/or sensor signals) to the same bus actuator in addition to the bus actuator itself being connected to drive a component.

In one embodiment the bus actuator it is adapted to be connected to said first component including a flow control valve controlling the flow rate in a heating and cooling system comprising heat exchanging means , and said at least one additional component is a multi-way valve changing between a cooling and heating mode operation of the heat exchanging means. In this manner the bus actuator itself is connected to a component adapted to adjust the basic flow rate level in a heat and cooling system, but at the same time could be adapted to control the change between heating and cooling mode.

It may for some purposes be an advantage the bus actuator can be informed e.g. if the system actually operates in either the heating or cooling mode, and thus the bus actuator may be it adapted to process feedback data from said additional component representing its actual operation, such as the multi-way valve.

The efficiency of pressure balanced heating and/or cooling systems is higher than when un-balanced, and the first component, such as the flow control valve further comprises pressure independent control means in addition to the flow regulating means.

The additional component(s) in data exchange connection to the bus actuator through positioning means adapted to adjust said additional component(s), the bus actuator thus being adapted to be in data exchange communication to a positioning means connected to drive said additional component(s), e.g. being a the multi-way valve, in response to an actuation signal communicated from said bus actuator.

In some situations it may be an advantage that a use is capable of making a manual adjustment of an additional component, but where the bus actuator would be able to identify this change. This could be e.g. the bus actuator is positioned at one remote position, but in a local sub-circuit it is chosen to change between cooling and heating mode. The positioning means connected to an additional component thus would comprise means to change between and manual and an automatic regulation of said multi-way valve, and where the bus actuator is adapted to compares the feedback signal to the actuation signal, and evaluate if these are un-correlated or does not follow each other in a specified manner, then link this to the positioning means is set in manual regulation mode.

In one embodiment the bus actuator would include an diagnostic feature related to identify if an additional component are blocked, such as a multi-way valve. The bus actuator thus is adapted to compare a feedback signal to the actuation signal, and if these does seems to be correlated but does not follow each other as expected, then to evaluated this to be due to the additional component, such as multi-way valve, is blocked.

It may be during installation that the additional component(s), such as a multi-way valve, is not correctly connected to its positioning means, such that an actuation of a driving means of said positioning means would not fully actuate the additional component as expected, in one embodiment the bus actuator would be able to detect this situation. Therefore in one embodiment, if the feedback signal indicates the positioning means operates the additional component, such as multi-way valve, out of its limits, then the bus actuator is adapted to use this as an indication that the additional component, such as multi-way valve, and the positioning means are not correctly connected, or not connected at all.

It may also be the data communication between the bus actuator and an additional component not working or is connected at all, thus in one embodiment, if the feedback signal is missing, the bus actuator is adapted to use this as an indication that a cable connecting to a positioner is disconnected or damaged.

The cooling mode and heating mode of the system may be set to operate a different parameters, and in an embodiment the bus actuator thus is adapted to operate the first component e.g. a flow control valve in at least two flow and or pressure settings or limitation modes, a heating flow and/or pressure setting and / or limitation mode, and a cooling flow and / or pressure setting and / or limitation mode.

The present invention further relates to a method to operate a bus actuator connected to a heating and cooling system, where said bus actuator comprises:
- actuating means adapted to drive a first component, and
- a bus connection allowing the bus actuator in addition to be in data exchange connection 9 to at least one additional component.
wherein the bus actuator further comprises or is in connection to data processing means adapted to generate an actuation signal to respectively drive said first component, wherein the method comprises the steps of generating an actuation signal for said actuating means to adjust said first component to adjust a flow rate in said heating and cooling system, and a second step of generating an actuation signal communicated to the at least one additional component through the bus connection, to change between a cooling and heating mode operation of the heat exchanging means.

The present invention further relate to the methods of operation of the bus actuator according to any of the above described embodiments.

### BRIEF DESCRIPTION OF THE DRAWINGS

The invention will now be described in further detail with reference to the accompanying drawings in which
Fig. 1 is a diagram of a cooling and heating system comprising a valve being actuated by means of an actuator according to an embodiment of the invention
Fig. 2 is a diagram of a cooling and heating system comprising a valve being actuated by means of an actuator according to an embodiment of the invention, and where said cooling and heating system are operating in a cooling mode
Fig. 3 is a diagram of a cooling and heating system comprising a valve being actuated by means of an actuator according to an embodiment of the invention, and where said cooling and heating system are operating in a heating mode
Fig. 4 is an embodiment bus actuator according to the present invention connected to a flow and pressure control valve
Fig. 5 is an embodiment bus actuator according to the present invention connected to 6-way valve.
Fig. 6 is a flow chart illustrate a first embodiment method of operation of said bus actuator
Fig. 7 is a flow chart illustrate a second embodiment method of operation of said bus actuator
Fig. 8 is a flow chart illustrate a third embodiment method of operation of said bus actuator
Fig. 9 is a flow chart illustrate a fourth embodiment method of operation of said bus actuator
Fig. 10 is a flow chart illustrate a fifth embodiment method of operation of said bus actuator

### DETAILED DESCRIPTION OF THE DRAWINGS

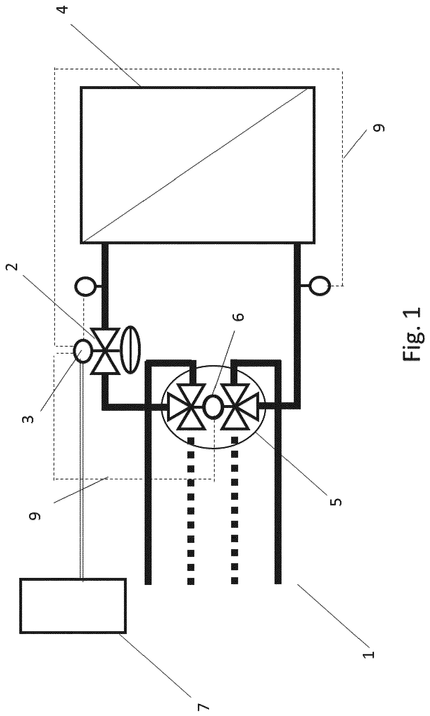

Fig. 1 is a diagram of a cooling and heating system 1 comprising a valve 2 being actuated by means of a bus actuator 3 according to an embodiment of the invention. The cooling and heating system 1 further comprises a heat exchanger 4 and a multi-way valve 5. In the illustrated embodiment the multi-way valve 5 is a 6-port valve connected to a positioner 6, or positioning means. In one embodiment the multi-way valve 5 is a single valve having 6-ports, where two individual fluid flows each can be directed along two different paths. Alternatively it could be formed of a plural of valves operating together as a single unit possible operated by a single shared positioning means 6 or each being connected to an individual positioning means 6.

The system 1 of Fig. 1 is of a kind which can be in a cooling mode, where cooling is provided via the heat exchanger 4, or in a heating mode, where heating is provided via the heat exchanger 4. The system 1 can be switched between the cooling mode and the heating mode by appropriately controlling the valves 2, 5 of the system 1. The system 1 may be operated in the following manner.

In the case that it is desired to operate the system 1 in the cooling mode, the bus actuator 3 closes the valve 2 whereto it is connected, and sends an control actuation signal to the 6-path valve 5 in order to close as well, in such a manner that it is ensured that any heating fluid which may be present in the heat exchanger 4 is removed.

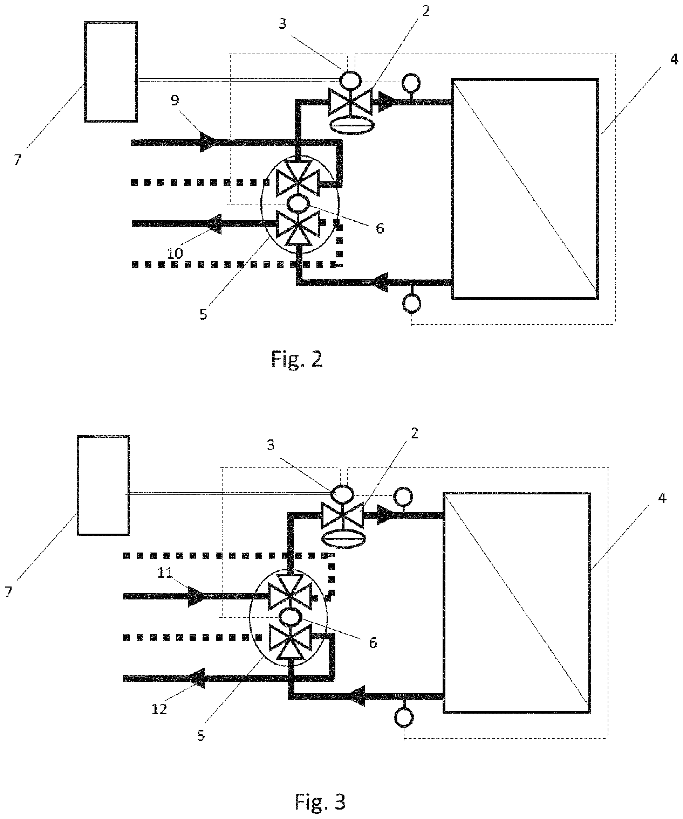

Then the actuator 3 sends a control signal to the 6-path valve 5, instructing them to open a passage which provides cooling fluid, seen in Fig. 2. Finally, the actuator 3 actuates the valve 2 in such a manner that the flow of cooling fluid to the heat exchanger 4 is controlled in an appropriate manner. The fluid flow through the system 1 in this case is illustrated by arrows 9 and 10. The flow paths represented by slashed lines then are closed off by the 6-path valve 5.

In the case that it is desired to operate the system 1 in the heating mode, a similar procedure is performed. Thus, the bus actuator 3 controls the valve 2 and sends control signals to the 6-path valve 5 in order to cause it to open a passage which provides heating fluid, fig. 3, similarly to the procedure described above. Finally, the actuator 3 actuates the valve 2 in such a manner that the flow of heating fluid to the heat exchanger 4 is controlled in an appropriate manner. The fluid flow through the system 1 in this case is illustrated by arrows 11 and 12. The flow paths represented by slashed lines then are closed off by the 6-path valve 5.

In an embodiment the bus actuator 3 is adapted to operate valve 2 in at least two flow settings and/or pressure settings, such as within two sets of limitations, a heating setting / limitation mode, and a cooling setting / limitation mode. This is due to requirements like pressure and flow rate may differ if the system 1 is in cooling mode or heating mode.

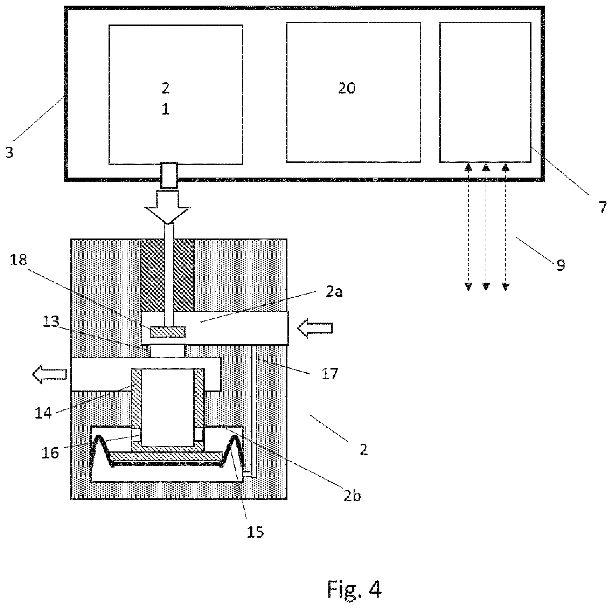

Fig. 4 is a highly schematically illustration the actuator 3 to be connected to the valve 2. The valve 2 in the illustration highly schematically shows one of a plural different valves that could be used in the present invention, in the illustrated embodiment one of a range of different possible differential pressure independent balancing and control valves. In the embodiment the valve 2 thus includes a flow regulation part 2a and a pressure regulating part 2b. The pressure regulating part 2b includes a valve orifice 13 positioned in the path between an inlet and an outlet. A pressure regulating closing member 14 connected to a membrane 15 that possible is biased by a spring element (not illustrated) operates together with the valve orifice 13. The membrane divides a space in two sub-spaces, the one in pressure communication 16 to the one side of the valve orifice 13 and the other in pressure communication 17 to the second side of the valve orifice 13. A change of differential pressure over the valve orifice 13 thus will be communicated 16, 17 to a deflection of the membrane 15, and a movement of the closing member 14 relative to the valve orifice 14 to modify the fluid until the pressures has equalized. The flow valve part 2a defines the flow rate through the valve 2 by the position of a flow control element 18 relative to the upper side of the valve orifice 13.

The bus actuator 3 includes the connecting bus 7 comprising all the hardware and software means to make a data exchange connection 9 to one or more external components, such as to the positioning means 5 of the multi-way valve 5, or in the more specific illustrated embodiment, 6-path valve 5, but also possible other components like temperature sensors 8 etc. The connection could be by wire, cable, wireless etc.

The bus actuator 3 further may comprise or be in connection to data processing means 20 capable of processing the data exchanged and making the required actuation signal being directed to the connected components 2, 5. It further would include all the required control electronics. The processing means 20 may be accessible and possible controllable and/or programmable from external means in any manner (wireless, wired, by internet, Bluetooth etc.).

The bus actuator 3 further may comprise actuating means 21 including all the required means for making the actual actuation (motor etc.), and a part being in actuation connection to the flow control element 18 of the flow regulating part 2a of the valve 2. The bus actuator 3 thus would be physically connected to the valve 2.

In an embodiment the positioning means 6 comprises means to communicate a feedback signal back to the bus actuator 3. This feedback signal in one embodiment represents the actual actuation being done by the positioning means 6.

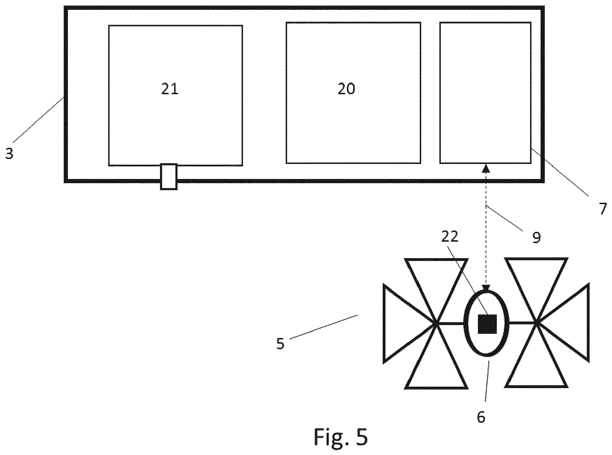

Fig. 5 illustrates an embodiment data exchange 9 connection of the bus actuator 3 to the positioning means 6 of a 6-port valve 5. The positioning means 6 may have means 22 for a user to set it to manual operation mode, where any actuation signal from the bus actuator 3 is being overruled. The positioning means 6 then controls and regulates the multi-way valve 5 according to settings from a user by the manually setting means 22.

In an embodiment, if in the positioning means 6 is set to manual operation mode, the feedback signal to the bus actuator 3 on the actual actuation of the multi-way valve 5 would be uncorrelated to any actuation signals from the bus actuator 3. By comparing the actuation signal to the feedback signal, the bus actuator 3 thus could us identify a manual operation setting in a component, such as the positioning means 6 by identifying some un-correlation between actuation signal and actuation signal. This then could lead to an action, such as a bus actuator 3 signalling in some manner that a component is set to manual, which may be without intention, done by forgetting to re-set to automatically mode etc.

In an embodiment the bus actuator 3 is adapted to compare the feedback signal to the actuation signal, and if these differs it may be an indication the multi-way valve 5 is blocked in some manner. This could be the signals to some degree are correlated, but the feedback differs from the expectations given the actuation signal. This then could lead to an action, such as a bus actuator 3 signalling in some manner that a component does not function according to the expectations, such as a multi-way valve 5 being blocked.

In an embodiment the bus actuator 3 is adapted to evaluate a feedback signal exceeding some expected limit may be an indication a component is not correctly mounted. This could be a valve, such as a multi-way valve 5 not being correctly connected to the a positioning means 6, or not connected at all. As an example related to the component being a valve, like multi-way valve 5, this has some operation, stroke, limitations possible being lower than the operation, (stroke, rotation etc.), limitations of the positioning means 6. Thus, if the positioning means 6 goes to an operation (stroke, rotation etc.), outside the expected limit, this may be an indication it is not actually in operational contact with the multi-way valve 5. This then could lead to an action, such as a bus actuator 3 signalling in some manner that a component is not connected according to the expectations. Another example is the actuation means 21 of the bus actuator 3 connection to the valve 2.

In an embodiment the bus actuator 3 is adapted to evaluate that if the feedback signal missing altogether, then this could be an indication that a connection to a component is missing or damaged, e.g. a cable connecting to positioning means 6 being disconnected or damaged.

In an embodiment the bus actuator 3 further has a maintenance mode where it is capable to fully close the valve 2 and other components, like the multi-way valve 5, to prevent any leakage, unlike other modes.

In an embodiment to save peak energy consumption, the bus actuator 3 is adapted only to actuate one component at a time, e.g. either the control valve 2 or a multi-way valve 5. This ensures there will not be any accumulated energy consumption for the individual components. In an embodiment however, this may be overruled in some modes of operation, e.g. in the maintenance mode, such as if a leak is detected and the system needs to be closed for repair, or when it has been detected a component is not correctly connected, is malfunctioning etc. according to the previously described embodiments. The system 1 may include means for manually overriding the settings, e.g. manually to change between cooling and heating modes. Therefore the system 1 in an embodiment comprises means to indicate whether it operates in cooling or heating mode, such as in one embodiment it is indicated through the bus actuator 3, or the positioning means 6.

The mode may be identified in different manners. In one embodiment it is identified by the positioning means 6 of the multi-way valve 5, either knowing the setting of the valve 5 or measuring the position of its valve element(s).

Alternatively or additionally, in an embodiment, since, as previously described, the valve 2 may operate differently in the cooling and heating modes respectively (flow settings and/or pressure settings), by kowing these actual positions/settings, possible by measurement of a valve postion by inclided sensors, then it is possible to know if the system runs in cooling or heating mode.

In an embodiment the bus actuator 3 knows the flow rate through the system 1 by the setting of the flow regulating part 2a of valve 3, the temperatures measured in the system 1 (such as supply and return temperatures) by one or more temperature sensors 30 connected or more different positions (fig. 1 illustrates one temperature sensor 30 position, which when combined e.g. with knowledge on the delivered fluid temperatures would indicate the temperature changes), optionally also the pressure setting of the pressure regulating part 2b of the valve 3, then it is possible for the bus actuator 3 to calculate and indicate the power and energy delivered to and / or exchanged in the system 1.

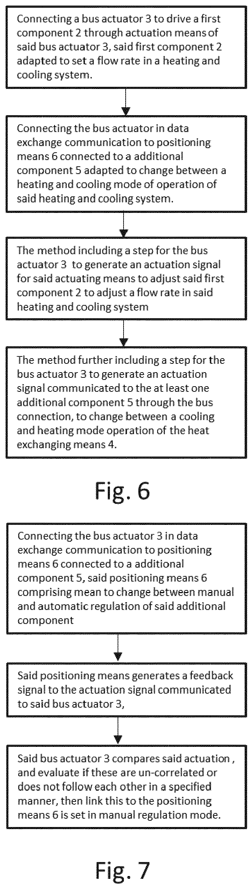

Fig. 6 illustrates the method embodiment including:
- connecting a bus actuator 3 to drive a first component 2 through actuation means of said bus actuator 3, said first component 2 adapted to set a flow rate in a heating and cooling system,
- Connecting the bus actuator in data exchange communication to positioning means 6 connected to a additional component 5 adapted to change between a heating and cooling mode of operation of said heating and cooling system.
- the bus actuator 3 generates an actuation signal for said actuating means to adjust said first component 2 to adjust a flow rate in said heating and cooling system
- the bus actuator 3 generates an actuation signal communicated to the at least one additional component 5 through the bus connection, to change between a cooling and heating mode operation of the heat exchanging means 4.

Fig. 7 illustrates and additional or alternative embodiment including:
- connecting the bus actuator 3 in data exchange communication to positioning means 6 connected to an additional component 5, said positioning means 6 comprising mean to change between manual and automatic regulation of said additional component
- Said positioning means generates a feedback signal to the actuation signal communicated to said bus actuator 3,
- Said bus actuator 3 compares said actuation , and evaluate if these are un-correlated or does not follow each other in a specified manner, then link this to the positioning means 6 is set in manual regulation mode.

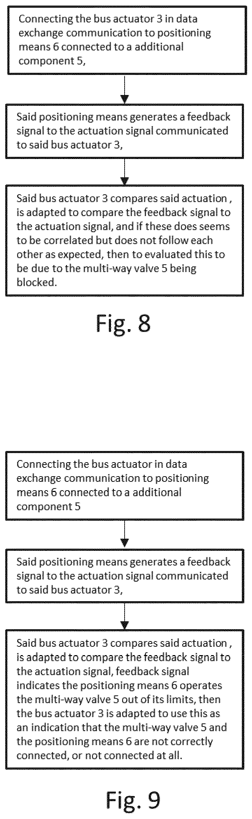

Fig. 8 illustrates and additional or alternative embodiment including:
- connecting the bus actuator 3 in data exchange communication to positioning means 6 connected to an additional component 5, said positioning means 6 comprising mean to change between manual and automatic regulation of said additional component
- Said positioning means generates a feedback signal to the actuation signal communicated to said bus actuator 3,
- Said bus actuator 3 compares said actuation , is adapted to compare the feedback signal to the actuation signal, and if these does seems to be correlated but does not follow each other as expected, then to evaluated this to be due to the multi-way valve 5 being blocked.

Fig. 9 illustrates and additional or alternative embodiment including:
- connecting the bus actuator 3 in data exchange communication to positioning means 6 connected to an additional component 5, said positioning means 6 comprising mean to change between manual and automatic regulation of said additional component
- Said positioning means generates a feedback signal to the actuation signal communicated to said bus actuator 3,
- Said bus actuator 3 compares said actuation , is adapted to compare the feedback signal to the actuation signal, feedback signal indicates the positioning means 6 operates the multi-way valve 5 out of its limits, then the bus actuator 3 is adapted to use this as an indication that the multi-way valve 5 and the positioning means 6 are not correctly connected, or not connected at all.

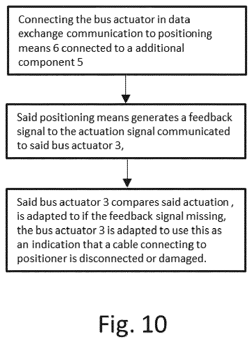

Fig. 10 illustrates and additional or alternative embodiment including:
- connecting the bus actuator 3 in data exchange communication to positioning means 6 connected to an additional component 5, said positioning means 6 comprising mean to change between manual and automatic regulation of said additional component
- Said positioning means generates a feedback signal to the actuation signal communicated to said bus actuator 3,
- Said bus actuator 3 compares said actuation , is adapted to if the feedback signal missing, the bus actuator 3 is adapted to use this as an indication that a cable connecting to positioner is disconnected or damaged.

## Claims

1. A bus actuator (3) for connection to a heating and cooling system, where said bus actuator (3) comprises:
- actuating means adapted to drive a first component (2), and
- a bus connection allowing the bus actuator (3) in addition to be in data exchange connection (9) to at least one additional component (5).
**characterized in that** said the bus actuator (3) further comprises or is in connection to data processing means adapted to generate an actuation signal to respectively drive said first component (2), wherein said bus actuator (3) is adapted to be generating an signal at a first step a signal for said actuating means to adjust said first component (2) to adjust a flow rate in said heating and cooling system, and at a second step to be generating an actuation signal communicated to the at least one additional component (5) through the bus connection (9), to change between a cooling and heating mode operation of the heat exchanging means (4).

2. A bus actuator (3) according to claim 1, wherein it is adapted to be connected to said first component including a flow control valve controlling the flow rate in a heating and cooling system comprising heat exchanging means (4), and said at least one additional component is a multi-way valve (5) changing between a cooling and heating mode operation of the heat exchanging means (4).

3. A bus actuator (3) according to claim 1 or 2, where it is adapted to process feedback data from said additional component representing its actual operation.

4. A bus actuator (3) according to claim 2 or 3, wherein the flow control valve further comprises pressure independent control means.

5. A bus actuator 3 according to any of the preceding claims 2-4, where it is adapted to be in data exchange communication to a positioning means (6) connected to drive the multi-way valve (5) in response to an actuation signal communicated from said bus actuator (3).

6. A bus actuator (3) according to claim 5, wherein said positioning means (6) comprises means to change between and manual and an automatic regulation of said multi-way valve, and where the bus actuator (3) is adapted to compares the feedback signal to the actuation signal, and evaluate if these are un-correlated or does not follow each other in a specified manner, then link this to the positioning means (6) is set in manual regulation mode.

7. A bus actuator (3) according to claim 5 or 6, where the bus actuator (3) is adapted to compare the feedback signal to the actuation signal, and if these does seem to be correlated but does not follow each other as expected, then to evaluated this to be due to the multi-way valve (5) being blocked.

8. A bus actuator (3) according to one of claims 5 to 7, where, if the feedback signal indicates the positioning means 6 operates the multi-way valve (5) out of its limits, then the bus actuator (3) is adapted to use this as an indication that the multi-way valve (5) and the positioning means (6) are not correctly connected, or not connected at all.

9. A bus actuator (3) according to one of claims 5 to 8, where, if the feedback signal missing, the bus actuator (3) is adapted to use this as an indication that a cable connecting to positioner is disconnected or damaged.

10. A bus actuator (3) according to any of the preceding claims 2-9, wherein the bus actuator (3) is adapted to operate the flow control valve (2) in at least two flow and or pressure settings or limitation modes, a heating flow and/or pressure setting and / or limitation mode, and a cooling flow and / or pressure setting and / or limitation mode.

11. Method to operate a bus actuator (3) connected to a heating and cooling system, where said bus actuator (3) comprises:
- actuating means adapted to drive a first component (2), and
- a bus connection allowing the bus actuator (3) in addition to be in data exchange connection (9) to at least one additional component (5).
**characterized in that** the bus actuator (3) further comprises or is in connection to data processing means adapted to generate an actuation signal to respectively drive said first component, wherein the method comprises the steps of generating an actuation signal for said actuating means to adjust said first component (2) to adjust a flow rate in said heating and cooling system, and a second step of generating an actuation signal communicated to the at least one additional component (5) through the bus connection, to change between a cooling and heating mode operation of the heat exchanging means (4).

12. Method comprising steps adapted to operate all apparatus means of any of the apparatuses of claims 3-10.

## Patentansprüche

1. Bus-Aktor (3) für Verbindung mit einem Heiz- und Kühlsystem, wobei der Bus-Aktor (3) Folgendes umfasst:
- Betätigungsmittel, die dazu ausgelegt sind, eine erste Komponente (2) anzutreiben, und
- eine Busverbindung, die es dem Bus-Aktor (3) zusätzlich ermöglicht, in Datenaustauschverbindung (9) mit mindestens einer Zusatzkomponente (5) zu sein.
**dadurch gekennzeichnet, dass** der Bus-Aktor (3) ferner Datenverarbeitungsmittel umfasst oder damit in Verbindung ist, die dazu ausgelegt sind, ein Betätigungssignal zu erzeugen, um jeweils die erste Komponente (2) anzutreiben, wobei der Bus-Aktor (3) dazu ausgelegt ist, bei einem ersten Schritt ein Signal für die Betätigungsmittel zu erzeugen, um die erste Komponente (2) einzustellen, um eine Durchflussmenge in dem Heiz- und Kühlsystem einzustellen, und bei einem zweiten Schritt ein Betätigungssignal zu erzeugen, das durch die Busverbindung (9) zu der mindestens einen Zusatzkomponente (5) übermittelt wird, um zwischen einem Kühl- und Heizmodusbetrieb der Wärmetauschereinrichtung (4) zu wechseln.

2. Bus-Aktor (3) gemäß Anspruch 1, der dazu ausgelegt ist, mit der ersten Komponente verbunden zu werden, die ein Durchflussregelventil enthält, das die Durchflussmenge in einem Heiz- und Kühlsystem steuert, das eine Wärmetauschereinrichtung (4) umfasst, und die mindestens eine Zusatzkomponente ein Mehrwegeventil (5) ist, das zwischen einem Kühl- und Heizmodusbetrieb der Wärmetauschereinrichtung (4) wechselt.

3. Bus-Aktor (3) gemäß Anspruch 1 oder 2, der dazu ausgelegt ist, Rückmeldungsdaten von der Zusatzkomponente zu verarbeiten, die ihren tatsächlichen Betrieb repräsentieren.

4. Bus-Aktor (3) gemäß Anspruch 2 oder 3, wobei das Durchflussregelventil ferner druckunabhängige Steuerungsmittel umfasst.

5. Bus-Aktor (3) gemäß einem der vorhergehenden Ansprüche 2-4, der dazu ausgelegt ist, in Datenaustauschkommunikation mit einer Positioniereinrichtung (6) zu stehen, die verbunden ist, um das Mehrwegeventil (5) in Reaktion auf ein von dem Bus-Aktor (3) übermitteltes Betätigungssignal anzutreiben.

6. Bus-Aktor (3) gemäß Anspruch 5, wobei die Positioniereinrichtung (6) Mittel zum Wechseln zwischen einer manuellen und einer automatischen Regelung des Mehrwegeventils umfasst, und wobei der Bus-Aktor (3) dazu ausgelegt ist, das Rückmeldungssignal mit dem Betätigungssignal zu vergleichen und zu beurteilen, ob diese unkorreliert sind oder einander nicht in einer vorgeschriebenen Weise folgen, um dies dann mit der Positioniereinrichtung (6) zu verbinden, die auf den manuellen Regelungsmodus eingestellt ist.

7. Bus-Aktor (3) gemäß Anspruch 5 oder 6, wobei der Bus-Aktor (3) dazu ausgelegt ist, das Rückmeldungssignal mit dem Betätigungssignal zu vergleichen, und falls diese korreliert zu sein scheinen, aber einander nicht wie erwartet folgen, diesen Umstand darauf zurückzuführen, dass das Mehrwegeventil (5) blockiert ist.

8. Bus-Aktor (3) gemäß einem der Ansprüche 5 bis 7, wobei, falls das Rückmeldungssignal anzeigt, dass die Positioniereinrichtung (6) das Mehrwegeventil (5) außerhalb seiner Grenzen betätigt, der Bus-Aktor (3) dazu ausgelegt ist, dies als ein Anzeichen dafür zu verstehen, dass das Mehrwegeventil (5) und die Positioniereinrichtung (6) nicht korrekt oder überhaupt nicht verbunden sind.

9. Bus-Aktor (3) gemäß einem der Ansprüche 5 bis 8, wobei, falls das Rückmeldungssignal fehlt, der Bus-Aktor (3) dazu ausgelegt ist, dies als ein Anzeichen dafür zu verstehen, dass ein Verbindungskabel zum Positionierer getrennt oder beschädigt ist.

10. Bus-Aktor (3) gemäß einem der vorhergehenden Ansprüche 2-9, wobei der Bus-Aktor (3) dazu ausgelegt ist, das Durchflussregelventil (2) in mindestens zwei Durchfluss- und/oder Druckeinstellungen oder Begrenzungsmodi, einer Heizungsfluss- und/oder Druckeinstellung und/oder einem Begrenzungsmodus sowie einer Kühlfluss- und/oder Druckeinstellung und/oder einem Begrenzungsmodus zu betätigen.

11. Verfahren zum Betätigen eines Bus-Aktors (3), der mit einem Heiz- und Kühlsystem verbunden ist, wobei der Bus-Aktor (3) Folgendes umfasst:
- Betätigungsmittel, die dazu ausgelegt sind, eine erste Komponente (2) anzutreiben, und
- eine Busverbindung, die es dem Bus-Aktor (3) zusätzlich ermöglicht, in Datenaustauschverbindung (9) mit mindestens einer Zusatzkomponente (5) zu sein.
**dadurch gekennzeichnet, dass** der Bus-Aktor (3) ferner Datenverarbeitungsmittel umfasst oder damit in Verbindung ist, die dazu ausgelegt sind, ein Betätigungssignal zu erzeugen, um jeweils die erste Komponente anzutreiben, wobei das Verfahren die Schritte des Erzeugens eines Betätigungssignals für die Betätigungsmittel umfasst, um die erste Komponente (2) einzustellen, um eine Durchflussmenge in dem Heiz- und Kühlsystem einzustellen, und einen zweiten Schritt des Erzeugens eines Betätigungssignals, das durch die Busverbindung zu der mindestens einen Zusatzkomponente (5) übermittelt wird, um zwischen einem Kühl- und Heizmodusbetrieb der Wärmetauschereinrichtung (4) zu wechseln.

12. Verfahren, das Schritte umfasst, die dazu ausgelegt sind, alle Vorrichtungsmittel einer beliebigen der Vorrichtungen der Ansprüche 3-10 zu betätigen.

## Revendications

1. Actionneur de bus (3) pour une connexion à un système de chauffage et de refroidissement, où ledit actionneur de bus (3) comprend :
- des moyens d'actionnement conçus pour attaquer un premier composant (2), et
- une connexion de bus permettant à l'actionneur de bus (3) d'être en plus dans une connexion d'échange de données (9) vers au moins un composant additionnel (5). **caractérisé en ce que** ledit l'actionneur de bus (3) comprend en outre ou est en connexion vers des moyens de traitement de données conçus pour générer un signal d'actionnement pour attaquer respectivement ledit premier composant (2), ledit actionneur de bus (3) étant conçu à une première étape pour générer un signal pour lesdits moyens d'actionnement afin d'ajuster ledit premier composant (2) destiné à ajuster un débit dans ledit système de chauffage et de refroidissement, et à une deuxième étape pour générer un signal d'actionnement communiqué à l'au moins un composant additionnel (5) par l'intermédiaire de la connexion de bus (9), afin d'effectuer un changement entre un fonctionnement en mode de refroidissement et de chauffage des moyens d'échange de chaleur (4).

2. Actionneur de bus (3) selon la revendication 1, dans lequel il est conçu pour être connecté audit premier composant incluant une soupape de commande de flux laquelle commande le débit dans un système de chauffage et de refroidissement comprenant des moyens d'échange de chaleur (4), et ledit au moins un composant additionnel est une soupape à voies multiples (5) changeant entre un fonctionnement en mode de refroidissement et de chauffage des moyens d'échange de chaleur (4) .

3. Actionneur de bus (3) selon la revendication 1 ou 2, où il est conçu pour traiter des données de rétroaction en provenance dudit composant additionnel représentant son fonctionnement réel.

4. Actionneur de bus (3) selon la revendication 2 ou 3, dans lequel la soupape de commande de flux comprend en outre des moyens de commande indépendants de la pression.

5. Actionneur de bus (3) selon l'une quelconque des revendications 2-4, où il est conçu pour être en communication d'échange de données vers un moyen de positionnement (6) connecté pour attaquer la soupape à voies multiples (5) en réaction à un signal d'actionnement communiqué à partir dudit actionneur de bus (3) .

6. Actionneur de bus (3) selon la revendication 5, dans lequel ledit moyen de positionnement (6) comprend des moyens pour changer entre et une régulation manuelle et automatique de ladite soupape à voies multiples, et où l'actionneur de bus (3) est conçu pour comparer le signal de rétroaction au signal d'actionnement, et pour évaluer si ceux-ci sont en non corrélation ou ne suivent pas l'un après l'autre suivant une manière spécifiée, puis la liaison de ceci au moyen de positionnement (6) qui est réglée dans le mode de régulation manuel.

7. Actionneur de bus (3) selon la revendication 5 ou 6, où l'actionneur de bus (3) est conçu pour comparer le signal de rétroaction au signal d'actionnement, et si ceux-ci semblent effectivement être en corrélation mais ne suivent pas l'un après l'autre comme prévu, alors pour évaluer ceci comme étant dû au blocage de la soupape à multi-voies (5).

8. Actionneur de bus (3) selon l'une des revendications 5 à 7, où, si le signal de rétroaction indique que le moyen de positionnement (6) opère la soupape multi-voies (5) hors de ses limites, alors l'actionneur de bus (3) est conçu pour utiliser ceci comme une indication que la soupape multi-voies (5) et le moyen de positionnement (6) ne sont pas connectés correctement, ou ne sont pas connectés du tout.

9. Actionneur de bus (3) selon l'une des revendications 5 à 8, où, si le signal de rétroaction est manquant, l'actionneur de bus (3) est conçu pour utiliser ceci comme une indication qu'un câble connectant vers le positionneur est déconnecté ou endommagé.

10. Actionneur de bus (3) selon l'une quelconque des revendications 2-9, l'actionneur de bus (3) étant conçu pour opérer la soupape de commande de flux (2) dans au moins deux réglages de flux et ou de pression ou des modes de limitation, un réglage de flux et/ou de pression de chauffage et / ou un mode de limitation, et un réglage de flux et / ou de pression de refroidissement et / ou un mode de limitation.

11. Procédé pour opérer un actionneur de bus (3) connecté à un système de chauffage et de refroidissement, où ledit actionneur de bus (3) comprend :
- des moyens d'actionnement conçus pour attaquer un premier composant (2), et
- une connexion de bus permettant à l'actionneur de bus (3) d'être en plus dans une connexion d'échange de données (9) vers au moins un composant additionnel (5), **caractérisé en ce que** l'actionneur de bus (3) comprend en outre ou est en connexion vers des moyens de traitement de données conçus pour générer un signal d'actionnement pour attaquer respectivement ledit premier composant, le procédé comprenant les étapes de génération d'un signal d'actionnement pour lesdits moyens d'actionnement afin d'ajuster ledit premier composant (2) destiné à ajuster un débit dans ledit système de chauffage et de refroidissement, et une deuxième étape de génération d'un signal d'actionnement communiqué à l'au moins un composant additionnel (5) par l'intermédiaire de la connexion de bus, afin d'effectuer un changement entre un fonctionnement en mode de refroidissement et de chauffage des moyens d'échange de chaleur (4) .

12. Procédé comprenant des étapes conçues pour faire fonctionner tous les moyens d'appareils de l'un quelconque des appareils des revendications 3-10.
